# EUROPEAN PATENT SPECIFICATION

(11) **EP 2 946 516 B1**
(45) Date of publication and mention of the grant of the patent: **10.10.2018**
(21) Application number: 13852340.2
(22) Date of filing: 23.12.2013
(51) Int. Cl.: H04W 72/12, H04L 5/00

(54) **METHOD OF CARRIER AGGREGATION-BASED SEPARATION OF CONTROL PLANE FROM USER PLANE**
FUNKTRÄGER-AGGREGATION BASIERTE METHODE ZUR SEPARIERUNG VON KONTROLL- UND NUTZEREBENE
PROCÉDÉ DE SÉPARATION DU PLAN DE COMMANDE DU PLAN UTILISATEUR FONDÉE SUR UNE AGRÉGATION DE PORTEUSES

(30) Priority: 18.01.2013 CN 201310020470
(43) Date of publication of application: 25.11.2015
(73) Proprietor: Alcatel Lucent, 91620 Nozay (FR)
(72) Inventor: YANG, Tao, Shanghai 201206 (CN); LIM, Seau Sian, Swindon Wiltshire SN1 4GU (GB)
(74) Representative: Berthier, Karine
(86) International application number: PCT/IB2013/003014
(87) International publication number: WO 2014/111748

(56) References cited:
- EP-A2- 2 343 946
- HIROYUKI ISHII ET AL: "A novel architecture for LTE-B :C-plane/U-plane split and Phantom Cell concept", GLOBECOM WORKSHOPS (GC WKSHPS), 2012 IEEE, IEEE, 3 December 2012 (2012-12-03), pages 624-630, XP032341446, DOI: 10.1109/GLOCOMW.2012.6477646 ISBN: 978-1-4673-4942-0
- "3rd Generation Partnership Project; Technical Specification Group Radio Access Network; Evolved Universal Terrestrial Radio Access (E-UTRA); Medium Access Control (MAC) protocol specification (Release 11)", 3GPP STANDARD; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.1.0, 2 January 2013 (2013-01-02), pages 1-57, XP050691624, [retrieved on 2013-01-02]

## Description

### Field of the invention

The present disclosure relates to the field of wireless communications, and particularly, to a method of carrier aggregation-based separation of a control plane from a user plane in base stations and a user equipment of a wireless communication network.

### Background of the invention

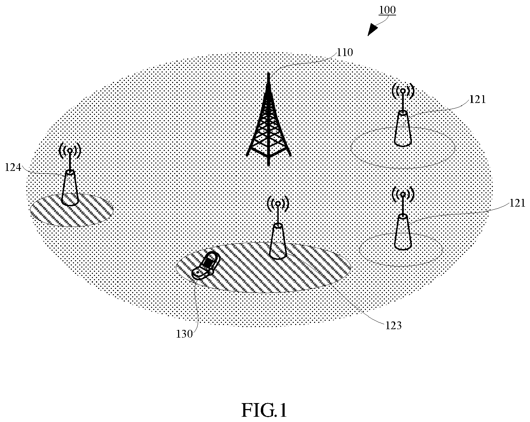

Nowadays, there are typically a macro base station with a larger coverage area and pico base stations with relatively smaller coverage areas in a heterogeneous wireless communication network today. Fig.1 illustrates a schematic diagram 100 of a network architecture in the prior art, and as can be apparent, in such a network environment, a macro base station 110 provides underlying network coverage (as illustrated by a dotted background in the figure), and in the meantime, for example, pico base stations 121, 122, 123 and 124 at small power (that is, with small network coverage areas (areas illustrated by oblique lines in the figure) provide a possible network access at a higher speed. At this time a user equipment residing in a coverage area common to the macro base station and a pico base station will be capable of setting up communication connections to both of them concurrently, and this may result in the problem of how to communicate with optimized use of the macro base station and the pico base station for the purpose of maximized and optimized use of the user equipment and the two types of base stations.

In general, the macro base station typically serves as a primary service cell in view of convenient mobility management, and at this time the pico base stations serve as secondary service cells correspondingly. At this time, RRC signaling will be transmitted over a scheduling grant of the macro base station, and data part will be transmitted over a scheduling grant of a pico base station. As such, on one hand, the scheduling grant on the macro base station may be underused for the RRC signaling, that is, the remaining scheduling grant on the macro base station may be available to other signaling, but a conventional practice is to have only the RRC signaling transmitted on the macro base station so that the remaining scheduling grant will be wasted; and on the other hand, a type of important "control signaling", i.e., MAC CE signaling, is also desired to be possibly transmitted over a scheduling grant of the macro base station, and transmission thereof over a scheduling grant of the pico base station may suffer a delay in transmission via an X2 interface, and this may be adverse to both communication over the wireless network and optimized subsequent scheduling.
A Novel Architecture for LTE-B, C-plane/U-plane Split and Phantom Cell Concept, Hiroyuki Ishii, DOCOMO Innovations, Inc. et al., GC'12 Workshop: International Workshop on Emerging Technologies for LTE-Advanced and Beyond -4G, 978-1-4673-4941-3/12/$31.00 ©2012 IEEE, teaches an approach in increasing the capacity of LTE cellular networks. The solution is based on massive deployment of small cells by leveraging high frequency reuse at high frequency bands in conjunction with a Macrocell.
EP 2 343 946 A2 teaches a method and apparatus for logical channel prioritization at a user equipment in a multiple uplink carrier system, the method receiving a set of logical channel priorities at the user equipment, the logical channel priorities being assigned on a per carrier basis.

### Summary of the invention

The present invention is defined in the independent claims. The dependent claims define particular embodiments of the invention.

In view of the prior art and the technical problem thereof identified as above, a first aspect of the invention proposes a method of carrier aggregation-based separation of a control plane from a user plane in base stations of a wireless communication network, wherein the base stations include a macro base station and a pico base station configured respectively as a primary service cell and a secondary service cell to set up communication connections with a user equipment, the method characterized by the steps of:
a. the macro base station prioritizing RRC signaling over MAC CE signaling to be transmitted to the user equipment in a scheduling grant on the macro base station;
b. in the step a, if the remaining scheduling grant on the macro base station after the RRC signaling is transmitted is available to the MAC CE signaling, then the macro base station transmitting the MAC CE signaling to the user equipment; otherwise, the macro base station transmitting the MAC CE signaling to the pico base station; and
c. the pico base station prioritizing the MAC CE signaling over data part to be transmitted in a scheduling grant on the pico base station.

The inventive method can make full and reasonable use of the scheduling grant on the macro base station at the base station side.

Moreover preferably, in an embodiment of the invention, in the step c, if the remaining scheduling grant on the macro base station after the control signaling and the MAC CE signaling is transmitted is available, then the data part is transmitted and/or redundancy is filled in the remaining grant.

In this way, reasonable user of the scheduling grant on the macro base station can be maximized as described above, while allowing the data part of the user plane to be transmitted over the scheduling grant of the macro base station.

In an embodiment of the invention, the MAC CE signaling includes secondary service cell activation/deactivation signaling, TAC signaling or DRX signaling. Those skilled in the art shall appreciate that the MAC CE signaling can also be other appropriate MAC CE signaling in addition to these three types of signaling.

A second aspect of the invention provides a method of carrier aggregation-based separation of a control plane from a user plane in a user equipment of a wireless communication network, wherein base stations include a macro base station and a pico base station configured respectively to set up communication connections with the user equipment, and the method includes:
o. receiving an indication from the wireless communication network notifying the user equipment that a condition for separation of the control plane from the user plane is satisfied;
p. upon reception of the indication, the user equipment initiating a process of generating an RLC PDU, wherein:
   p1. prioritizing RRC signaling over MAC CE signaling to be transmitted over an uplink grant of the macro base station, and when the remaining uplink grant of the macro base station is available to the MAC CE signaling, reserving a corresponding part of the grant for the MAC CE signaling to form a first RLC PDU and transmit the first RLC PDU to a MAC layer, the first RLC PDU including the RRC signaling or including the RRC signaling and reserving the corresponding part of the grant for the MAC CE; otherwise,
   p2. prioritizing the MAC CE signaling over data part to be transmitted over an uplink grant of the pico base station, and if the MAC CE signaling needs to be transmitted over the uplink grant of the pico base station, then reserving a corresponding part of the grant for the MAC CE signaling and forming a second RLC PDU and transmitting the second RLC PDU to the MAC layer; and
q. forming first and second MAC PDUs, at the MAC layer respectively from the first and second RLC PDUs and the MAC CE signaling and transmitting the first and second MAC PDUs respectively to the macro base station and the pico base station.

In an example of the invention, if the remaining uplink grant of the macro base station is available after the control signaling and the MAC CE signaling is transmitted, then the step p1 further includes:
putting the data part respectively into the uplink grant of the macro base station according to priorities of logic channels dependent upon whether the data part is allowed to use the uplink grant of the macro base station, and generating the first RLC PDU.

In an example of the invention, the macro base station and the pico base station communicate with each other via X2 signaling of an X2 interface.

In an example of the invention, the MAC CE signaling is BSR signaling, and in the step q, the first MAC PDU and/or the second MAC PDU include BSR information of a control channel and/or a data channel.

In an example of the invention, the first MAC PDU and the second MAC PDU further includes first forward indication information to instruct the macro base station to forward the BSR information of the data channel or instruct the pico base station to forward the BSR information of the control channel respectively to the macro base station or the pico base station via an X2 interface.

In an example of the invention, the first forward indication is a logic channel group ID or a logic channel ID.

In an example of the invention, the MAC CE signaling is PHR signaling/extended PHR signaling, and in the step q, the first MAC PDU and the second MAC PDU include PHR information of the macro base station and the pico base station, respectively.

In an example embodiment of the invention, the MAC CE signaling is PHR signaling/extended PHR signaling, and in the step q, the first MAC PDU or the second MAC PDU includes PHR information of the macro base station and the pico base station, and second forward indication information to instruct the macro base station to forward the PHR information of the pico base station or instruct the pico base station to forward the PHR information of the macro base station respectively to the pico base station or the macro base station via an X2 interface.

In summary, the methods of carrier aggregation-based separation of a control plane from a user plane at the base station side and the user equipment side according to the invention can have a grant reasonably configured throughout the network and improve the efficiency of use of a scheduling grant on a macro base station as well as an uplink grant of the macro base station on a user equipment, and moreover, control signaling (e.g., RRC signaling) is transmitted only over the scheduling grant on the macro base station, and a large coverage area and a low frequency of the macro base station make the macro base station highly reliable, and moreover, data is also transmitted over a high-frequency spectrum resource of a pico base station to thereby also improve the transmission rate of the data; and on the other hand, no Hand Over procedure needs to be initiated when a user equipment enters and leaves frequently a small coverage area of the pico base station, so that mobility management will not be influenced. Furthermore, MAC CE signaling of great importance to control is also prioritized to be transmitted over the scheduling grant on the macro base station to thereby lower a delay in transmission of the MAC CE signaling and consequently improve the operative efficiency of the entire network.

### Brief description of drawings

Other features, objects and advantages of the invention will become more apparent upon review of the following detailed description of non-limiting embodiments taken with reference to the drawings in which:
Fig.1 illustrates the schematic diagram 100 of the network architecture in the prior art;

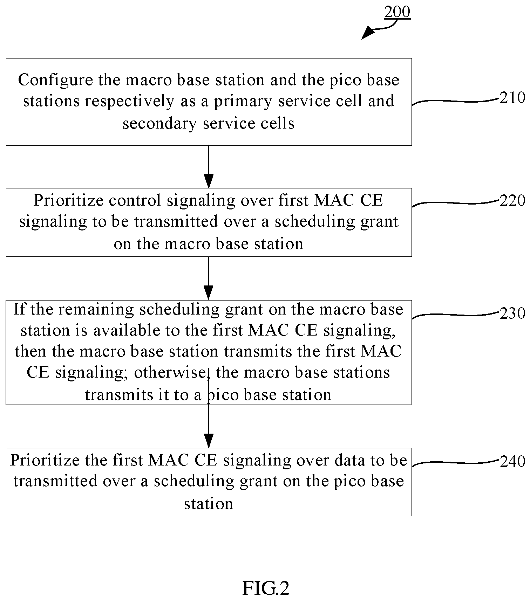

Fig.2 illustrates a method 200 of carrier aggregation-based separation of a control plane from a user plane in base stations of a wireless communication network according to the invention; and
Fig.3 illustrates a method 300 of carrier aggregation-based separation of a control plane from a user plane in a user equipment of a wireless communication network according to the invention.

Identical or similar devices (modules) or steps will be denoted by identical or similar reference numerals throughout the drawings.

### Detailed description of embodiments

The following particular description of preferred embodiments will be given with reference to the drawings constituting a part of the invention. The drawings exemplarily illustrate particular embodiments, in which the invention can be practiced. The exemplary embodiments are not intended to exhaust all the embodiments of the invention. As can be appreciated, other embodiments can be possible or structural or logical modifications can be made without departing from the scope of the invention. Thus the following detailed description is not intended to be limiting, and the scope of the invention will be defined as in the appended claims.

Fig.1 illustrates the schematic diagram 100 of the network architecture in the prior art, and this figure has been described in the section "Background of the invention", so a repeated description thereof will be omitted here.

In order to make full use of a scheduling grant of a macro base station and transmit signaling between the macro base station, a pico base station and a user equipment more smoothly and conveniently on the precondition of ensuring mobility management, in view of the prior art and the technical problem thereof as identified above, a first embodiment of the invention 200 proposes a method of carrier aggregation-based separation of a control plane from a user plane in base stations of a wireless communication network, where the base stations include a macro base station 110 and pico base stations 121, 122, 123 and 124 configured respectively to set up communication connections with a user equipment 130, and the method includes:
Firstly, in the step 210, the macro base station and the pico base stations are configured respectively as a primary service cell (Pcell) and secondary service cells (Scells);
Then, in the step 220, controlling signaling is prioritized over first MAC CE signaling to be transmitted over a scheduling grant on the macro base station;
Next, in the step 230, it is determined whether the remaining scheduling grant on the macro base station after the control signaling is transmitted in the step 220 is available to the first MAC CE signaling; and if so, then the macro base station transmits the first MAC CE signaling; otherwise, the macro base station transmits the first MAC signaling to a pico base station, and the pico base station transmits the first MAC signaling; and
Finally, in the step 240, the first MAC CE control signaling is prioritized over data part to be transmitted over a scheduling grant on the pico base station. If the first MAC CE signaling is transmitted from the macro base station, then the first MAC CE signaling is prioritized to be put into an MAC PDU of the scheduling grant for transport, and then the normal data part is put into the MAC PDU of the scheduling grant for transport; but if the first MAC CE has been transported over the scheduling grant of the macro base station, then only the data part will be transmitted over the scheduling grant of the pico base station.

In this embodiment, the control signaling is transmitted over the scheduling grant of the macro base station, and the data part is transmitted over the scheduling grant of the pico base station. However in a practical application, the remaining scheduling grant on the macro base station may be idle after the control signaling (e.g., conventional RRC signaling) and the first MAC CE signaling is put in the scheduling grant, and at this time the remaining grant will not be used fully and reasonably, thus wasting the scheduling grant on the macro base station. In order to avoid this situation from occurring, in an embodiment of the invention, in the step 230, if the remaining scheduling grant on the macro base station remains after the control signaling (e.g., conventional RRC signaling) and the first MAC CE signaling is transmitted, then the data part is transmitted and/or redundancy is filled in the remaining grant.

In this way, reasonable use of the scheduling grant on the macro base station can be maximized as desirable to those skilled in the art. Moreover the first MAC CE signaling will be firstly forwarded to the pico base station and then transmitted over the scheduling grant on the pico base station only if no or no sufficient grant on the macro base station is available to transmission of the first MAC CE signaling on the macro base station, and this can ensure as much as possible timely transmission of the first MAC CE signaling to thereby improve the configurative efficiency throughout the wireless communication network.

In an embodiment of the invention, the first MAC CE signaling includes secondary service cell activation/deactivation signaling, TAC signaling or DRX signaling. Those skilled in the art shall appreciate that the first MAC CE signaling mentioned here can also be any other appropriate MAC CE signaling in addition to these three types of signaling.

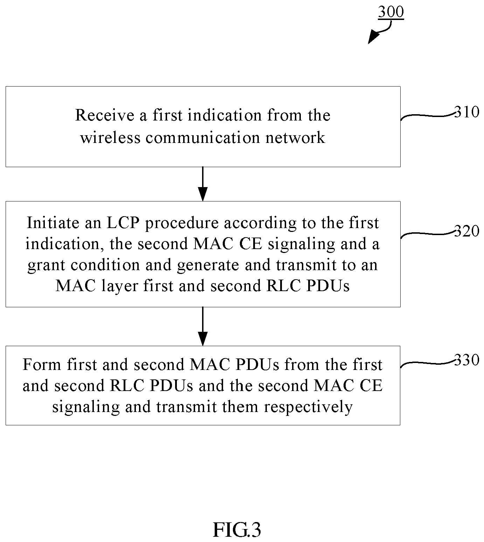

In addition to the foregoing optimization at the base station side, optimization is also necessary at the user equipment side, so another embodiment of the invention as illustrated in Fig.3 proposes a method according to the invention 300 of carrier aggregation-based separation of a control plane from a user plane in a user equipment of a wireless communication network, where base stations also include a macro base station and pico base stations configured respectively to set up communication connections with the user equipment, and as illustrated in Fig.3, the method includes:
Firstly in the step 310, a first indication is received from the wireless communication network, where the first indication here can be indication information allowing the user equipment for separation of the control plane from the user plane, for example, when the user equipment enters an overlapping area of coverage areas of a pico base station and the macro base station, the base station side sends the indication information to notify the user equipment that a condition for separation of the control plane from the user plane is satisfied and to instruct the user equipment to separate the control plane from the user plane;
Then in the step 320, the user equipment initiates a process of generating an RLC PDU upon reception of the first indication, where this step can include the following sub-steps:
   Sub-step 1: control signaling is prioritized over second MAC CE signaling to be transmitted over an uplink grant of the macro base station, and when the remaining uplink grant of the macro base station is available to the second MAC CE signaling, a corresponding part of the grant is reserved for the second MAC CE signaling to form a first RLC PDU and transmit the first RLC PDU to an MAC layer, the first RLC PDU including the control signaling or including the control signaling and reserving the corresponding part of the grant for the second MAC CE; otherwise,
   Sub-step 2: and the second MAC CE signaling is prioritized over data part to be transmitted over an uplink grant of a pico base station, and if the second MAC CE signaling needs to be transmitted over the uplink grant of the pico base station, then a corresponding part of the grant is reserved for the second MAC CE signaling and a second RLC PDU is formed and transmitted to the MAC layer; and
Finally, in the step 330, first and second MAC PDUs are formed at the MAC layer respectively from the first and second RLC PDUs and the second MAC CE signaling and transmitted respectively to the macro base station and the pico base station.

Alike in this embodiment, the control signaling is transmitted over the uplink grant of the macro base station, and the data part is transmitted over the uplink grant of the pico base station. However in a practical application, the remaining uplink grant on the macro base station may be idle after the control signaling (e.g., conventional RRC signaling) and the second MAC CE signaling is put into the uplink grant, and at this time the remaining grant will not be used fully and reasonably, thus wasting the uplink grant on the macro base station. In order to avoid this situation from occurring, in an embodiment of the invention, in the step 320, if the remaining uplink grant on the macro base station is available after the control signaling (e.g., conventional RRC signaling) and the second MAC CE signaling is transmitted, then the data part is transmitted and/or redundancy is filled in the remaining grant.

In this way, reasonable use of the uplink grant on the macro base station can be maximized as desirable to those skilled in the art. Moreover the second MAC CE signaling will be firstly forwarded to the pico base station and then transmitted over the scheduling grant on the pico base station only if no or no sufficient grant on the macro base station is available to transmission of the second MAC CE signaling on the macro base station, and this can ensure as much as possible timely transmission of the second MAC CE signaling to thereby improve the configurative efficiency throughout the wireless communication network.

In an embodiment of the invention, if the remaining uplink grant of the macro base station is available after the control signaling and the second MAC CE signaling is transmitted, then the sub-step 1 of the step 320 further includes:
The data part is put respectively into the uplink grant of the macro base station according to priorities of logic channels dependent upon whether the data part is allowed to use the uplink grant of the macro base station, and the first RLC PDU is generated.

In an embodiment of the invention, the macro base station and the pico base station communicate with each other via X2 signaling of an X2 interface.

Moreover, in an embodiment of the invention, the second MAC CE signaling can be BSR signaling, and in the step 330, the first MAC PDU and/or the second MAC PDU include BSR information of a control channel and/or a data channel. Here there are four possible combinations of schemes in combination, and in one of the combinations of schemes, where the first MAC PDU includes BSR signaling of only a control signaling and the second MAC PDU includes BSR signaling of only a data channel, they are transmitted respectively to the macro base station and the pico base station.

In the foregoing embodiment, if the first MAC PDU or the second MAC PDU includes BSR information of a control channel and a data channel, which means that all the BSR information (that is, of the control channel and the data channel) will be received by the macro base station or the pico base station, and at this time in such an embodiment, the first MAC PDU and the second MAC PDU further includes first forward indication information to instruct the macro base station to forward the BSR information of the data channel or instruct the pico base station to forward the BSR information of the control channel respectively to the macro base station or the pico base station via the X2 interface. Particularly, in an embodiment of the invention, the first forward indication is a logic channel group ID or a logic channel ID.

In an embodiment of the invention, the second MAC CE signaling is PHR signaling/extended PHR signaling, and in the step 330, the first MAC PDU and the second MAC PDU include PHR information of the macro base station and the pico base station respectively, and at this time the PHR information of the macro base station and the pico base station will be transmitted respectively to the corresponding macro base station and pico base station. In this way the power information of the macro base station and the pico base station will be transmitted respectively without a subsequent forwarding process in which the macro base station forwards the power information of the pico base station to the pico base station or the pico base station forwards the received power information of the macro base station to the corresponding base station.

In an embodiment of the invention, the second MAC CE signaling can be PHR signaling/extended PHR signaling, and in the step 330, the first MAC PDU or the second MAC PDU includes PHR information of the macro base station and the pico base station, and at this time, like the foregoing BSR information, the PHR information to be received by the pico base station or the macro base station will be received by that pico base station or macro base station, and at this time, second forward indication information will be included to instruct the macro base station to forward the PHR information of the pico base station or instruct the pico base station to forward the PHR information of the macro base station respectively to the pico base station or the macro base station via the X2 interface.

In summary, the inventive methods of carrier aggregation-based separation of a control plane from a user plane at the base station side and the user equipment side can have a grant reasonably configured throughout the network and improve the efficiency of use of a scheduling grant on a macro base station as well as an uplink grant of the macro base station on a user equipment, and moreover control signaling (e.g., RRC signaling) is transmitted only over the scheduling grant on the macro base station, and a large coverage area and a low frequency of the macro base station make the macro base station highly reliable, and moreover data is also transmitted over a high-frequency spectrum resource of a pico base station to thereby also improve the transmission rate of the data; and on the other hand, no HO procedure needs to be initiated when a user equipment enters and leaves frequently a small coverage area of the pico base station so that mobility management will not be influenced. Furthermore MAC CE signaling of great importance to control is also prioritized to be transmitted over the scheduling grant on the macro base station to thereby lower a delay in transmission of the MAC CE signaling and consequently improve the operative efficiency of the entire network.

Accordingly the embodiments shall be construed anyway to be exemplary and non-limiting. Moreover apparently the term "comprising" will not preclude another element(s) or step(s), and the term "a" or "an" will not preclude plural. A plurality of elements stated in an apparatus claim can alternatively be embodied as a single element. The terms "first", "second", etc., are intended to designate a name but not to suggest any specific order.

## Claims

1. A method of carrier aggregation-based separation of a control plane from a user plane in base stations of a wireless communication network, wherein the base stations include a macro base station and a pico base station configured (210) respectively as a primary service cell and a secondary service cell to set up communication connections with a user equipment, the method **characterized by** the steps of:
a. the macro base station prioritizing (220) Radio Resource Control, RRC, signaling over Medium Access Control Control Element, MAC CE signaling to be transmitted to the user equipment in a scheduling grant on the macro base station;
b. in the step a, if the remaining scheduling grant on the macro base station after the RRC signaling is transmitted is available to the MAC CE signaling (230), then the macro base station transmitting the MAC CE signaling to the user equipment; otherwise, the macro base station transmitting the MAC CE signaling to the pico base station; and
c. the pico base station prioritizing (240) the MAC CE signaling over data part to be transmitted in a scheduling grant on the pico base station.

2. The method according to claim 1, wherein in the step b, if the remaining scheduling grant on the macro base station after the RRC signaling and the MAC CE signaling is transmitted is available, then the data part is transmitted and/or redundancy is filled in the remaining grant.

3. The method according to claim 1 or 2, wherein the MAC CE signaling includes secondary service cell activation/deactivation signaling, Tracking Area Code, TAC, signaling or Discontinuous Reception, DRX, signaling.

4. A method of carrier aggregation-based separation of a control plane from a user plane in a user equipment of a wireless communication network, wherein base stations include a macro base station and a pico base station configured respectively to set up communication connections with the user equipment, and the method comprises:
o. receiving (310) an indication from the wireless communication network notifying the user equipment that a condition for separation of the control plane from the user plane is satisfied;
**characterized by**
p. upon reception of the indication, the user equipment initiating a process of generating an Radio Link Control Protocol Data Unit, RLC PDU, (320), wherein:
p1. prioritizing RRC signaling over MAC CE signaling to be transmitted over an uplink grant of the macro base station, and when the remaining uplink grant of the macro base station is available to the MAC CE signaling, reserving a corresponding part of the grant for the MAC CE signaling to form a first RLC PDU and transmit the first RLC PDU to an MAC layer, the first RLC PDU including the RRC signaling or including the RRC signaling and reserving the corresponding part of the grant for the MAC CE; otherwise,
p2. prioritizing the MAC CE signaling over data part to be transmitted over an uplink grant of the pico base station, and if the MAC CE signaling needs to be transmitted over the uplink grant of the pico base station, then reserving a corresponding part of the grant for the MAC CE signaling and forming a second RLC PDU and transmitting the second RLC PDU to the MAC layer; and
q. forming (330) first and second Medium Access Control Protocol Data Units, MAC PDUs, at the MAC layer respectively from the first and second RLC PDUs and the MAC CE signaling and transmitting the first and second MAC PDUs respectively to the macro base station and the pico base station.

5. The method according to claim 4, wherein if the remaining uplink grant of the macro base station is available after the RRC signaling and the MAC CE signaling is transmitted, then the step p1 further comprises:
putting the data part respectively into the uplink grant of the macro base station according to priorities of logic channels dependent upon whether the data part is allowed to use the uplink grant of the macro base station, and generating the first RLC PDU.

6. The method according to claim 4, wherein the macro base station and the pico base station communicate with each other via X2 signaling of an X2 interface.

7. The method according to claim 4 or 5, wherein the MAC CE signaling is Buffer Status Report, BSR, signaling, and in the step q, the first MAC PDU and/or the second MAC PDU include BSR information of a control channel and/or a data channel respectively.

8. The method according to claim 7, wherein the first MAC PDU and the second MAC PDU further include first forward indication information to instruct the macro base station to forward the BSR information of the data channel or instruct the pico base station to forward the BSR information of the control channel respectively to the macro base station or the pico base station via an X2 interface.

9. The method according to claim 8, wherein the first forward indication is a logic channel group ID or a logic channel ID.

10. The method according to claim 4 or 5, wherein the MAC CE signaling is Power Headroom Report, PHR, signaling/extended PHR signaling, and in the step q, the first MAC PDU and the second MAC PDU include PHR information of the macro base station and the pico base station respectively.

11. The method according to claim 4 or 5, wherein the MAC CE signaling is PHR signaling/extended PHR signaling, and in the step q, the first MAC PDU or the second MAC PDU includes PHR information of the macro base station and the pico base station, and second forward indication information to instruct the macro base station to forward the PHR information of the pico base station or instruct the pico base station to forward the PHR information of the macro base station respectively to the pico base station or the macro base station via an X2 interface.

## Patentansprüche

1. Verfahren einer Trägerbündelungs-basierten Trennung einer Steuerebene von einer Benutzerebene in Basisstationen eines drahtlosen Kommunikationsnetzwerks, wobei die Basisstationen einschließen eine Makro-Basisstation und eine Pico-Basisstation, die jeweils konfiguriert (210) sind als primäre Servicezelle und sekundäre Servicezelle zum Aufbau von Kommunikationsverbindungen mit einem Teilnehmergerät, wobei das Verfahren **gekennzeichnet ist durch** die folgenden Schritte:
a. die Makro-Basisstation priorisiert (220) die RRC-Signalgebung (Radio Resource Control) vor der MAC CE-Signalgebung (Medium Access Control Control Element), das übertragen werden muss auf das Teilnehmergerät in einer Scheduling-Bewilligung auf die Makro-Basisstation;
b. in Schritt a, wenn die verbleibende Scheduling-Bewilligung an der Makro-Basisstation, nachdem die RRC-Signalgebung übertragen worden ist, verfügbar ist für die MAC CE-Signalgebung (230), dann überträgt die Makro-Basisstation die MAC CE-Signalgebung auf das Teilnehmergerät;
ansonsten überträgt die Makro-Basisstation die MAC CE-Signalgebung auf die Pico-Basisstation; und
c. die Pico-Basisstation priorisiert (240) die MAC CE-Signalgebung vor dem Datenteil, der in einer Scheduling-Bewilligung übertragen werden muss, auf die Pico-Basisstation.

2. Verfahren nach Anspruch 1, wobei im Schritt b, wenn die verbleibende Scheduling-Bewilligung an der Makro-Basisstation, nachdem die RRC-Signalgebung und die MAC CE-Signalgebung übertragen worden sind, verfügbar ist, der Datenteil übertragen wird und/oder Redundanz in der verbleibenden Bewilligung aufgefüllt wird.

3. Verfahren nach Anspruch 1 oder 2, wobei die MAC CE-Signalgebung einschließt eine Aktivierungs-/Deaktivierungssignalgebung für die sekundäre Servicezelle, TAC-Signalgebung (Tracking Area Code) oder DRX-Signalgebung (Discontinous Reception).

4. Verfahren einer Trägerbündelungs-basierten Trennung einer Steuerebene von einer Benutzerebene in einem Teilnehmergerät eines drahtlosen Kommunikationsnetzwerks, wobei die Basisstationen eine Makro-Basisstation und eine Pico-Basisstation einschließen, die jeweils konfiguriert sind zum Aufbau von Kommunikationsverbindungen mit dem Teilnehmergerät, wobei das Verfahren umfasst:
o. Empfangen (310) einer Anzeige von dem drahtlosen Kommunikationsnetzwerk, die dem Teilnehmergerät mitteilt, dass eine Bedingung für eine Trennung der Steuerebene von der Benutzerebene erfüllt ist; **gekennzeichnet dadurch, dass**
p. nach Empfang der Anzeige, das Teilnehmergerät einen Prozess initiiert zum Erzeugen einer RLC PDU (320) (Radio Link Control Protocol Data Unit), wobei:
p1. die RRC-Signalgebung vor der MAC CE-Signalgebung priorisiert wird zum Übertragen über eine Uplink-Bewilligung der Makro-Basisstation, und wenn die verbleibende Uplink-Bewilligung der Makro-Basisstation verfügbar ist für die MAC CE-Signalgebung, Reservieren eines entsprechenden Teils der Bewilligung für die MAC CE-Signalgebung zum Bilden einer ersten RLC PDU und Übertragen der ersten RLC PDU an eine MAC-Schicht, wobei die erste RLC PDU einschließt die RRC-Signalgebung oder einschließend die RRC-Signalgebung und Reservieren des entsprechenden Teils der Bewilligung für die MAC CE; ansonsten
p2. Priorisieren der MAC CE-Signalgebung vor dem Datenteil, der übertragen werden muss über eine Uplink-Bewilligung der Pico-Basisstation, und wenn die MAC CE-Signalgebung übertragen werden muss über die Uplink-Bewilligung der Pico-Basisstation, dann Reservieren eines entsprechenden Teils der Bewilligung für die MAC CE-Signalgebung und Bilden einer zweiten RLC PDU und Übertragen der zweiten RLC PDU auf die MAC-Schicht; und
q. Bilden (330) erster und zweiter UAC PDUs (Medium Access Control Protocol Data Units) an der MAC-Schicht entsprechend aus den ersten und zweiten RLC PDUs und der MAC CE-Signalgebung und Übertragen der ersten und zweiten MAC PDUs entsprechend auf die Makro-Basisstation und die Pico-Basisstation.

5. Verfahren nach Anspruch 4, wobei die verbleibende Uplink-Bewilligung der Makro-Basisstation verfügbar ist, nachdem die RRC-Signalgebung und die MAC CE-Signalgebung übertragen worden sind, dann umfasst Schritt p1 weiterhin:
Einbauen des Datenteils entsprechend in die Uplink-Bewilligung der Makro-Basisstation gemäß den Prioritäten der Logikkanäle in Abhängigkeit davon, ob dem Datenteil gestattet ist, die Uplink-Bewilligung der Makro-Basisstation zu verwenden, und Erzeugen der ersten RLC PDU.

6. Verfahren nach Anspruch 4, wobei die Makro-Basisstation und die Pico-Basisstation miteinander kommunizieren über X2-Signalgebung einer X2-Schnittstelle.

7. Verfahren nach Anspruch 4 oder 5, wobei die MAC CE-Signalgebung eine BSR-Signalgebung (Buffer Status Report) ist und in Schritt q die erste MAC PDU und/oder die zweite MAC PDU jeweils einschließt BSR-Information eines Steuerkanals und/oder eines Datenkanals.

8. Verfahren nach Anspruch 7, wobei die erste MAC PDU und die zweite MAC PDU weiterhin einschließen erste Weiterleitanzeigeinformation zum Anweisen der Makro-Basisstation zum Weiterleiten der BSR-Information des Datenkanals oder zum Anweisen der Pico-Basisstation zum Weiterleiten der BSR-Information des Steuerkanals entsprechend zu der Makro-Basisstation oder zu der Pico-Basisstation über eine X2-Schnittstelle.

9. Verfahren nach Anspruch 8, wobei die erste Weiterleitanzeige eine logische Kanalgruppen-ID oder eine logische Kanal-ID ist.

10. Verfahren nach Anspruch 4 oder 5, wobei die MAC CE-Signalgebung eine PHR-Signalgebung (Power Headroom Report)/eine erweiterte PHR-Signalgebung ist, und in Schritt q die erste MAC PDU und die zweite MAC PDU jeweils einschließt PHR-Information jeweils der Makro-Basisstation und der Pico-Basisstation.

11. Verfahren nach Anspruch 4 oder 5, wobei die MAC CE-Signalgebung eine PHR-Signalgebung/erweiterte PHR-Signalgebung ist, und in Schritt q die erste MAC PDU oder die zweite MAC PDU PHR-Information der Makro-Basisstation und der Pico-Basisstation aufweist, und zweite Weiterleitanzeigeinformation zum Anweisen der Makro-Basisstation zum Weiterleiten der PHR-Information der Pico-Basisstation oder zum Anweisen der Pico-Basisstation zum Weiterleiten der PHR-Information der Makro-Basisstation entsprechend auf die Pico-Basisstation oder die Makro-Basisstation über eine X2-Schnittstelle.

## Revendications

1. Procédé de séparation d'un plan de commande d'avec un plan utilisateur basée sur une agrégation de porteuses dans des stations de base d'un réseau de communication sans fil, dans lequel les stations de base incluent une station de base macro et une station de base pico configurées (210) respectivement en tant que cellule de desserte principale et cellule de desserte secondaire pour établir des connexions de communication avec un équipement utilisateur, le procédé étant **caractérisé par** les étapes suivantes :
a. donner la priorité (220) par la station de base macro à une signalisation de commande de ressource radio, RRC, par rapport à une signalisation d'élément de commande de contrôle d'accès au support, CE MAC, à émettre vers l'équipement utilisateur dans un octroi de planification sur la station de base macro ;
b. à l'étape a, si l'octroi de planification restant sur la station de base macro après que la signalisation RRC a été émise est disponible pour la signalisation CE MAC (230), alors émettre par la station de base macro la signalisation CE MAC vers l'équipement utilisateur ; sinon, émettre par la station de base macro la signalisation CE MAC vers la station de base pico ; et
c. donner la priorité (240) par la station de base pico à la signalisation CE MAC par rapport à une partie données à émettre dans un octroi de planification sur la station de base pico.

2. Procédé selon la revendication 1, dans lequel à l'étape b, si l'octroi de planification restant sur la station de base macro après que la signalisation RRC et la signalisation CE MAC ont été émises est disponible, la partie données est alors émise et/ou une redondance est introduite dans l'octroi restant.

3. Procédé selon la revendication 1 ou 2, dans lequel la signalisation CE MAC inclut une signalisation d'activation/de désactivation de cellule de desserte secondaire, une signalisation de code de zone de suivi, TAC, ou une signalisation de réception discontinue, DRX.

4. Procédé de séparation d'un plan de commande d'avec un plan utilisateur basée sur une agrégation de porteuses dans un équipement utilisateur d'un réseau de communication sans fil, dans lequel les stations de base incluent une station de base macro et une station de base pico configurées respectivement pour établir des connexions de communication avec l'équipement utilisateur, le procédé comprenant les étapes suivantes :
o. recevoir (310) une indication du réseau de communication sans fil notifiant l'équipement utilisateur qu'une condition pour la séparation du plan de commande d'avec le plan utilisateur est satisfaite ;
**caractérisé par** l'étape suivante
p. à la réception de l'indication, lancer par l'équipement utilisateur un processus de génération d'une unité de données de protocole de commande de liaison radio, PDU RLC, (320), comprenant les étapes suivantes :
p1. donner la priorité à la signalisation RRC par rapport à la signalisation CE MAC à émettre sur un octroi de liaison montante de la station de base macro, et lorsque l'octroi de liaison montante restant de la station de base macro est disponible pour la signalisation CE MAC, réserver une partie correspondante de l'octroi pour la signalisation CE MAC afin de former une première PDU RLC et émettre la première PDU RLC vers une couche MAC, la première PDU RLC incluant la signalisation RRC ou incluant la signalisation RRC et réservant la partie correspondante de l'octroi pour le CE MAC ; sinon,
p2. donner la priorité à la signalisation CE MAC par rapport à la partie données à émettre sur un octroi de liaison montante de la station de base pico, et si la signalisation CE MAC nécessite d'être émise sur l'octroi de liaison montante de la station de base pico, réserver alors une partie correspondante de l'octroi pour la signalisation CE MAC et former une deuxième PDU RLC et émettre la deuxième PDU RLC vers la couche MAC ; et
q. former (330) des première et deuxième unités de données de protocole de contrôle d'accès au support, PDU MAC, au niveau de la couche MAC respectivement à partir des première et deuxième PDU RLC et de la signalisation CE MAC et émettre les première et deuxième PDU MAC respectivement vers la station de base macro et la station de base pico.

5. Procédé selon la revendication 4, dans lequel si l'octroi de liaison montante restant de la station de base macro est disponible après que la signalisation RRC et la signalisation CE MAC ont été émises, l'étape p1 comprend alors en outre l'étape suivante :
mettre la partie données respectivement dans l'octroi de liaison montante de la station de base macro selon les priorités de canaux logiques dépendantes du fait que la partie données est autorisée ou non à utiliser l'octroi de liaison montante de la station de base macro, et générer la première PDU RLC.

6. Procédé selon la revendication 4, dans lequel la station de base macro et la station de base pico communiquent entre elles via une signalisation X2 d'une interface X2.

7. Procédé selon la revendication 4 ou 5, dans lequel la signalisation CE MAC est une signalisation de rapport d'état de mémoire tampon, BSR, et à l'étape q, la première PDU MAC et/ou la deuxième PDU MAC incluent des informations BSR d'un canal de commande et/ou un canal de données respectivement.

8. Procédé selon la revendication 7, dans lequel la première PDU MAC et la deuxième PDU MAC incluent en outre des premières informations d'indication de transmission pour commander à la station de base macro de transmettre les informations BSR du canal de données ou commander à la station de base pico de transmettre les informations BSR du canal de commande respectivement à la station de base macro ou la station de base pico via une interface X2.

9. Procédé selon la revendication 8, dans lequel la première indication de transmission est un identifiant de groupe de canaux logiques ou un identifiant de canal logique.

10. Procédé selon la revendication 4 ou 5, dans lequel la signalisation CE MAC est une signalisation de rapport de marge de puissance, PHR, ou une signalisation PHR étendue, et à l'étape q, la première PDU MAC et la deuxième PDU MAC incluent des informations PHR de la station de base macro et de la station de base pico respectivement.

11. Procédé selon la revendication 4 ou 5, dans lequel la signalisation CE MAC est une signalisation PHR ou une signalisation PHR étendue, et à l'étape q, la première PDU MAC ou la deuxième PDU MAC inclut des informations PHR de la station de base macro et de la station de base pico, et des deuxièmes informations d'indication de transmission pour commander à la station de base macro de transmettre les informations PHR de la station de base pico ou commander à la station de base pico de transmettre les informations PHR de la station de base macro respectivement à la station de base pico ou la station de base macro via une interface X2.
